Europäisches Patentamt

(19) European Patent Office

Office européen des brevets

(11) Publication number: **0 147 929**
**B1**

(12) **EUROPEAN PATENT SPECIFICATION**

(45) Date of publication of patent specification: 20.06.90

(21) Application number: 84307537.5

(22) Date of filing: 01.11.84

(51) Int. Cl.⁵: **H 01 M 4/02,** H 01 M 6/14,
H 01 M 10/04, H 01 M 6/10

(54) **Making an electrical device.**

(30) Priority: 02.11.83 GB 8329207

(43) Date of publication of application:
10.07.85 Bulletin 85/28

(45) Publication of the grant of the patent:
20.06.90 Bulletin 90/25

(84) Designated Contracting States:
AT BE CH DE FR IT LI NL SE

(56) References cited:
DE-A-2 459 009      US-A-1 670 585
DE-B-1 097 961      US-A-2 942 050
FR-A- 599 362       US-A-3 368 924
FR-A-1 573 347      US-A-3 686 022
FR-A-2 328 299      US-A-3 721 113
GB-A- 532 581       US-A-3 783 666

PATENTS ABSTRACTS OF JAPAN, Vol. 6, No. 47
(E99) (925) March 26, 1982 & JP-A-56 162 473
(HITACHI MAXELL K.K.) (14-12-1981)

PATENTS ABSTRACTS OF JAPAN, Vol. 8, No.
13, (E-222) (1450) January 20, 1984, & JP-A-58
176 875 (DAINI SEIKOSHA K.K.) (17-10-1983)
(73) Proprietor: **SCIMAT LIMITED**
**Lennox House Spa Road**
**Gloucester (GB)**

(72) Inventor: **Mcloughlin, Robert Hamilton**
**45 Wessex Way**
**Swindon Wiltshire (GB)**
Inventor: **Park, George Barry**
**38 Restrop View**
**Purton Nr. Swindon Wiltshire (GB)**
Inventor: **Cook, John Anthony**
**188 Beech Close Orchard Hill**
**Faringdon Oxfordshire (GB)**

(74) Representative: **Belcher, Simon James et al**
**Urquhart-Dykes & Lord Tower House Merrion**
**Way**
**GB-Leeds LS2 8PA (GB)**

Courier Press, Leamington Spa, England.

# Description

This invention relates to a method of making electrochemical devices incorporating sensitive materials, and articles for use in such a method.

Electrode materials are sensitive insofar as they are difficult to handle during manufacture of electrochemical devices owing to physical weakness or high chemical reactivity, which may necessitate inconvenient handling procedures and/or special conditions such as dry room assembly. Examples of such sensitive materials include alkali metals and alkaline earth metals, notably lithium metal electrodes for lithium cells.

Lithium metal is difficult to roll into thin strips for use as an electrode, and U.S. Patent No. 3721113 describes a method of alleviating this difficulty by rolling the lithium between smooth (surface asperities less than one micron) polymeric surfaces having sufficiently low critical surface tension to prevent adhesion to the lithium. The polymer may be a coating on the surface of rolls used to roll the lithium, or may be in the form of sheeting enclosing or facing the lithium, which does not adhere to the lithium and is peeled off the lithium strip after rolling. While this method facilitates the rolling operation, which produces the thin lithium strip, it does not improve the efficiency of assembling the delicate lithium strip into electrochemical devices.

The present invention provides a method of making an electrochemical device which comprises:

(a) reshaping a strip of alkali or alkaline earth metal which is capable of functioning as an electrode in the device, while encapsulated by protective material, so as to increase the surface area of the strip substantially;

(b) removing the protective material during, after or immediately before incorporation the strip of metal in the device; and

(c) incorporating the strip of metal in the device, characterized in that the protective material is applied to the strip of metal by melt-extrusion of a tube thereof.

This introduction of protected sensitive metal electrode material into the electrochemical device assembly process leads to a number of advantages, especially with regard to automation of hitherto inefficient production processes for electrochemical devices.

It is an advantage of the present invention that the protected strip of metal may be used in a method wherein the protective strip is fed to apparatus which assembles portions of the metal into a plurality of the electrochemical devices. Preferably the protective material is removed during the feeding of the protected strip to the apparatus, and the apparatus receives a substantially continuous feed of the protected strip and automatically removes the protective material and assembles successive portions of the strip of metal into a succession of the electrochemical devices. The advantages of such an automated process over the piece-by-piece hand assembly methods hitherto used for alkali metal or alkaline earth metal electrode materials will be appreciated. The protective material may be non-adherent to the metal electrode material, for example in the form of a tube surrounding the strip of the material. However, adherent protective material is preferred.

The method according to this invention can be used to assemble the opposing electrode materials and other components of the electrochemical device with fewer difficulties than are encountered in handling unprotected electrode materials. The anode or the cathode, or both, of suitable electrochemical devices, for example electrochemical cells, may be provided by way of the method according to this invention, reactive metal anodes, especially lithium anodes, for electrochemical cells being an important practical application of the invention. The protected strips of metal used may include other components, for example current collector layers, or anti-passivation layers as known per se, adhering to part of the strip of metal e.g. on one major surface of a flat strip electrode. Such a current collector layer, for example, may provide permanent protection to one side of the electrode, with the removable protective material giving it desired temporary protection to the other side.

The protective material may be removed by liquid contact, for example contact with a liquid which is incorporated in the device, such as an electrolyte liquid. The protective material may be dissolved by the liquid. Alternatively, the protective material may be a coherent film which is peeled away from the strip of metal.

This invention is useful in relation to sensitive materials such as weak metals, by which is meant metal bodies having a lower tensile strength than an equal thickness of the protective material, especially lithium electrodes for lithium cells. Production of cells (preferably non-aqueous cells) having thin sheet electrodes of these and other materials, e.g., inherently conductive polymers, for example doped polyacetylenes or polypyrroles, or conductively filled polymers, can be facilitated by including the step of deforming the electrode material, for example by rolling, while in contact with the layer of protective material so as to decrease the thickness of the electrode material or otherwise alter its form or surface configuration. In this way, devices can be more conveniently assembled from thin sheets of lithium, for example of less than 0.25 millimetres, preferably less than 0.125 millimetres, especially of about 0.075 millimetres thickness, which would otherwise be difficult and expensive to make and assemble into such devices. It is preferred that the sensitive material be malleable under temperatures and pressures which do not unacceptably damage the protective layer. The protective material may also be deformed, e.g. by the rolling operation, in a manner which will assist its subsequent removal from the sensitive material.

The invention includes articles comprising the polymer-protected strips of metal in forms especially suited to the method of the invention, for example articles in elongate strip form suitable for feeding to the assembly apparatus; articles wherein cross-linked organic polymeric protective material is used; articles comprising the other components as aforementioned; articles wherein the protective material has been deformed in a manner which assists its subsequent removal; and articles wherein the strip of metal has been deformed as aforementioned. Suitable protective materials include organic materials preferably polymeric materials for example polymers of compounds with polymerizable double bonds and condensation polymers of condensable compounds.

Useful polymers of compounds with polymerizable double bonds may be selected from polymers of ethylenically unsaturated hydrocarbons having 2 to 12 carbons, such as ethylene propylene, n-hexylene, n-dodecene or 4-tert butylstyrene and of vinyl ethers such as methyl or ethyl vinyl ether. Preferred among these compounds are polyethylene and polypropylene due to their low cost.

Copolymers of the above monomeric compounds are also useful.

Useful condensation polymers may be selected from self-condensates of omega-amino-fatty acids and their lactams, such as condensation polymers from caprolactam and from 11-aminoundecanoic acid.

The condensation polymers can be polyamides of diamines having 6 to 9 carbons and dicarboxylic acids having 6 to 10 carbons. Typical useful diamines include hexamethylenediamine, nonamethylenediamine and aryldiamines such a m-and p-phenylenediamine. Typical useful dicarboxylic acids include adipic acid, suberic acid, azelaic acid, terephthalic acid and isophthalic acid. The preferred polyamide is the condensate of hexamethylenediamine and adipic acid, for reasons of general availability.

The condensation polymers can also be selected from polyesters of aryldicarboxylic acids such as phthalic, terephthalic and isophthalic acids and glycols having 2 to 6 carbons, such as ethylene, butylene and hexyleneglycols.

Useful solid polymeric compositions include ethylene/chlorotrifluoroethylene copolymers, poly(2-methylpropene), polypropylene, polyethylene, poly(4-tert-butylstyrene), poly(vinyl methyl ether), poly(6-aminocaproic acid), poly(11-aminoundecanoic acid), poly(ethyleneterephthalate), poly(decamethylene sebacamide), poly(heptamethylene pimelamide), poly(octamethylene suberamide), poly(nonamethylene azelaamide) and poly(hexamethylene adipamide).

In electrochemical cells incorporating substantially non-aqueous polar liquids, the protective material may comprise polymers which are soluble in such liquids, polyethylene oxides being preferred although other polar polymers may be chosen according to their solubility in the liquid actually used.

Liquids in such cells, for example in lithium cells, may for example include various combinations of propylene carbonate, dimethyl sulphoxide, gamma-butyrolactone, dimethyl formamide, acetonitrile, tetrahydrofuran, 1,2-dimethoxyethane and dioxolane.

Polyethylene oxides and other polar polymers may also be useful in cells incorporating aqueous liquids.

The protective polymeric materials will preferably be flexible and capable of adhering temporarily to the sensitive material, which may be assisted by suitable surface roughness of the polymer, for example surface asperities greater than one micron in height.

The protective material preferably will not interact with the strip of metal, although beneficial interactions are not excluded from the invention. Cross-linked protective materials, especially polymers cross-linked by ionising radiation, may have beneficial temperature resistance and other properties, and may be easier to peel away from the electrode material than uncrosslinked material.

Examples of the preparation of electrode materials in assembly with the protective polymer layer will now be described to illustrate the invention.

## Example 1

Lithium metal (supplied by Foote Mineral Co.) was encapsulated with polyethylene in a continuous process. Lithium tape, 0.25 millimetres thick and 37 millimetres wide was passed through a crosshead die on a single screw extruder (Baughn 32mm diam screw 25:1 L/D ratio) and a tube of polyethylene extruded around the lithium.

The tube was drawn down and laminated with the lithium by passing the lithium plus polyethylene between nip rolls. The total thickness of the three layered laminate was 0.75 millimetres i.e. 0.25 millimetres polyethylene on either side of the lithium. The polyethylene coating provided protection for lithium against the environment during storage and during rolling to reduce the lithium thickness to 0.075 millimetres prior to use in battery manufacture. Removal of the protective polymer during assembly into a lithium cell revealed shiny unreacted lithium metal. This procedure was followed with DYNH-3, a low density polyethylene from Union Carbide and Sclair 8405 a linear medium density polyethylene from Du Pont.

The laminates were prepared in a dry environment and the cell was assembled in a similar environment.

## Example 2

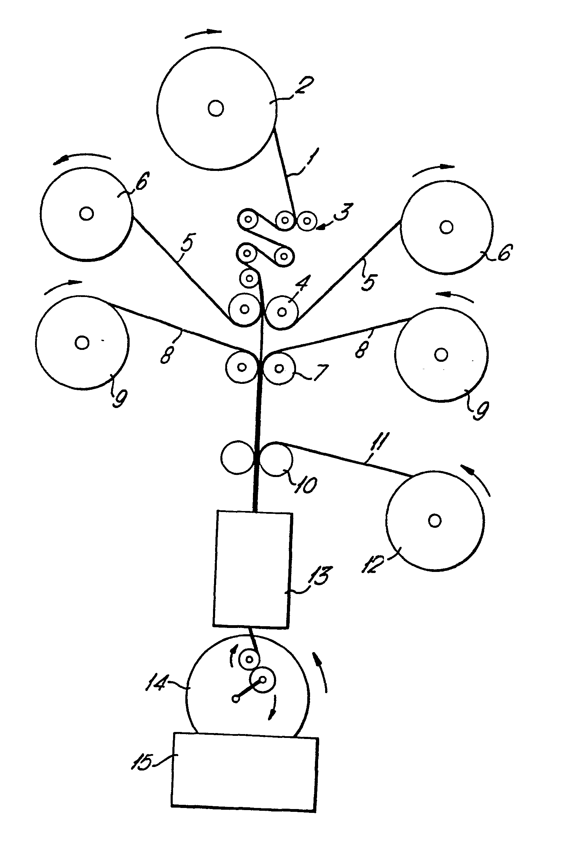

Automated cell assembly is demonstrated by feeding a strip of the protected lithium to apparatus illustrated schematically in the accompanying drawing.

Referring to the drawing, a strip (1) of lithium anode material protected by polymeric protective material according to the invention is fed from a

supply roll (2) via feed rolls (3) to stripping rolls (4), where the protective material (5) is taken off onto collector rolls (6), and thence to lay-up rolls (7) where a strip (8) of porous electrode separator material from supply rolls 9 is aligned with each side of the lithium strip. This assembly then passes to lay-up rolls 10 where a strip of cathode material (11) from feed roll (12) is closely aligned with the lithium anode separator assembly, the separator material previously aligned with the lithium anode being between the anode and the cathode. The aligned anode/ cathode assembly then proceeds to a spool threading unit (13) and thence to a spool winding unit (14) wherein the assembly is coiled or spooled to provide a coiled electrode assembly. The coiled assembly then passes to the spool casing unit (15), where the coiled assembly is sealed in a cell casing together with suitable electrolyte liquid. Suitable practical embodiments of the production equipment thus schematically described can readily be devised, and it will be understood that removal of the protective layer from only one side of the electrode strip is acceptable where the other side carries a coating such as a current collector layer which itself provides adequate protection without an overlying protective layer.

### Example 3

Example 1 was repeated using polyethylene oxide (WSR N750 from Union Carbide) in place of the polyethylene, and the encapsulating polyethylene oxide was removed from a portion of the lithium by dissolving it in a typical electrolyte solution for lithium cells, viz. 1M $LiClO_4$ in a 50:50 mixture of 1, 2-dimethoxyethane and propylene carbonate.

### Example 4

The encapsulated lithium produced in Example 3 was incorporated in a cell in a manner similar to that described in Example 2, except that the encapsulating polyethylene oxide was not removed at the stripper rolls (4) and was incorporated in the cell for subsequent removal by dissolution in the cell electrolyte liquid.

Attention is drawn to copending applications EP-A-146246, EP-A-143566, EP-A-145231 and EP-A-146245 which, like the present application, relate to the manipulation of sensitive electrode material for use in electrochemical devices.

EP-A-146246 relates to a method of making an electrode for use in an electrochemical device, in which fluid impermeable protective material which comprises a removable component is applied to a body of electrode material. The body of electrode material is reshaped while protected by the protective material.

EP-A-143566 relates to a method of making a protected electrode, in which a layer of fluid impermeable polymeric material, together with a body of a reactive metal that is capable of functioning as an electrode which it protects, is stretched so that the thickness of the body of metal is reduced, and the polymeric material is rendered fluid permeable.

EP-A-145231 relates to a method of making an electrochemical device in which a polymeric material that is soluble in the device electrolyte is crosslinked to render it insoluble, protects a body of a reactive metal electrode material. The polymeric material and the electrode material are then immersed in the electrolyte to cause the polymeric material to swell.

EP-A-146245 relates to a method of making an assembly comprising an electrode and a polymeric electrolyte, in which a flexible layer of protective material comprising a salt dispersed in organic polymeric material, is applied to a body of reactive electrode material, and the body of reactive metal is then reshaped while protected by the protective material.

### Claims

1. A method of making an electrochemical device which comprises:
(a) reshaping a strip of alkali or alkaline earth metal (1) which is capable of functioning as an electrode in the device, while encapsulated by protective material (5), so as to increase the surface area of the strip substantially;
(b) removing the protective material (5) during, after or immediately before incorporating the strip of metal (1) in the device; and
(c) incorporating the strip of metal (1) in the device,
characterized in that the protective material is applied to the strip of metal by melt-extrusion of a tube thereof.

2. A method according to claim 1, wherein the strip of metal (1) is fed to apparatus which assembles portions of the strip of metal into a plurality of the electrochemical devices.

3. A method according to claim 2, wherein the protective material (5) is removed during the feeding of the strip of protected metal (1) to the apparatus.

4. A method according to claim 3, wherein the apparatus receives a substantially continuous feed of the strip of protected metal (1) and automatically removes the protective material (5) and assembles successive portions of the metal into a succession of the electrochemical devices.

5. A method according to any of claims 1 to 4, wherein the protective material is removed by contact with liquid.

6. A method according to claim 1 or claim 2, wherein the protective material (5) is removed by contact with liquid incorporated in the device.

7. A method according to claim 6, wherein the liquid is a substantially non-aqueous polar liquid and the protective material (5) comprises polyethylene oxide.

8. A method according to any of the preceding claims, wherein the tube of protective material (5) includes at least one additional material in addition to the strip of metal (1) and the removable protective material (5), the additional material being capable of functioning as another component of the said electrochemical device.

9. A method according to any of the preceding claims, wherein the metal comprises lithium.

**Patentansprüche**

1. Verfahren zur Herstellung einer elektrochemischen Einrichtung, das folgendes umfaßt:

(a) Umformen eines Streifens aus Alkali- oder Erdalkalimetall (1), der in der Lage ist, als Elektrode in der Einrichtung zu fungieren, während er von einem Schutzmaterial (5) eingekapselt ist, um die Flächenausdehnung der Oberfläche des Streifens wesentlich zu vergrößern;

(b) Entfernen des Schutzmaterials (5) während des Einbaus, nach dem oder unmittelbar vor dem Einbau des Streifens aus Metall (1) in die Einrichtung; und

(c) Einbauen des Streifens aus Metall (1) in die Einrichtung, dadurch gekennzeichnet, daß das Schutzmaterial auf den Streifen aus Metall durch Schmelzextrusion eines daraus bestehenden Rohres aufgebracht wird.

2. Verfahren nach Anspruch 1, wobei der Streifen aus Metall (1) der Vorrichtung zugeführt wird, welche Teile des Streifens aus Metall zu einer Vielzahl von den elektrochemischen Einrichtungen zusammenbaut.

3. Verfahren nach Anspruch 2, wobei das Schutzmaterial (5) während der Zuführung des Streifens aus geschütztem Metall (1) zu der Vorrichtung entfernt wird.

4. Verfahren nach Anspruch 3, wobei die Vorrichtung eine im wesentlichen kontinuierliche Zufuhr des Streifens aus geschütztem Metall (1) erhält und automatisch das Schutzmaterial (5) entfernt und aufeinanderfolgende Teile des Metalls zu einer Folge von elektrochemischen Einrichtungen zusammenbaut.

5. Verfahren nach einem der Ansprüche 1 bis 4, wobei das Schutzmaterial durch Kontakt mit einer Flüssigkeit entfernt wird.

6. Verfahren nach Anspruch 1 oder Anspruch 2, wobei das Schutzmaterial (5) durch Kontakt mit einer in die Einrichtung eingebauten Flüssigkeit entfernt wird.

7. Verfahren nach Anspruch 6, wobei die Flüssigkeit eine im wesentlichen nicht-wasserhaltige polare Flüssigkeit ist und das Schutzmaterial (5) Polyethylenoxid aufweist.

8. Verfahren nach einem der vorhergehenden Ansprüche, wobei das Rohr aus Schutzmaterial (5) mindestens ein zusätzliches Material zusätzlich zu dem Streifen aus Metall (1) und dem entfernbaren Schutzmaterial (5) aufweist, wobei das zusätzliche Material in der Lage ist, als weitere Komponente der elektrochemischen Einrichtung zu fungieren.

9. Verfahren nach einem der vorhergehenden Ansprüche, wobei das Metall Lithium enthält.

**Revendications**

1. Procédé de fabrication d'un dispositif électrochimique, qui consiste:

(a) à refaçonner une bande de métal alcalin ou de métal alcalino-terreux (1) qui est capable de fonctionner comme électrode dans le dispositif, cependant qu'elle est encapsulée par une matière protectrice (5), afin d'accroître notablement la surface spécifique de la bande;

(b) à enlever la matière protectrice (5) pendant, après ou immédiatement avant l'incorporation de la bande de métal (1) dans le dispositif; et

(c) à incorporer la bande de métal (1) dans le dispositif,
caractérisé en ce que la matière protectrice est appliquée à la bande de métal par extrusion à l'état fondu d'un tube de cette matière.

2. Procédé suivant la revendication 1, dans lequel la bande de métal (1) est amenée à l'appareil qui assemble des portions de la bande de métal en formant plusieurs dispositifs électrochimiques.

3. Procédé suivant la revendication 2, dans lequel la matière protectrice (5) est enlevée pendant l'amenée à l'appareil de la bande de métal protégé (1).

4. Procédé suivant la revendication 3, dans lequel l'appareil reçoit une arrivée pratiquement continue de bande de métal protégé (1) et enlève automatiquement la matière protectrice (5) et assemble de même des portions successives du métal en une succession de dispositifs électrochimiques.

5. Procédé suivant l'une quelconque des revendications 1 à 4, dans lequel la matière protectrice est enlevée par contact avec un liquide.

6. Procédé suivant la revendication 1 ou la revendication 2, dans lequel la matière protectrice (5) est enlevée par contact avec un liquide incorporé dans le dispositif.

7. Procédé suivant la revendication 6, dans lequel le liquide est un liquide polaire principalement non aqueux et la matière protectrice (5) comprend du polyéthylène-oxyde.

8. Procédé suivant l'une quelconque des revendications précédentes, dans lequel le tube de matière protectrice (5) renferme au moins une matière additionnelle en plus de la bande de métal (1) et de la matière protectrice (5) pouvant-être enlevée, la matière additionnelle étant capable de fonctionner comme un autre composant dudit dispositif électrochimique.

9. Procédé suivant l'une quelconque des revendications précédentes, dans lequel le métal comprend du lithium.